# EUROPÄISCHE PATENTSCHRIFT

(11) **EP 4 545 903 B1**
(45) Veröffentlichungstag und Bekanntmachung des Hinweises auf die Patenterteilung: **16.09.2026**
(21) Anmeldenummer: 23206237.2
(22) Anmeldetag: 26.10.2023
(51) Int. Cl.: G01B 11/06, G01B 21/04

(54) **TERAHERTZ-MESSVORRICHTUNG UND VERFAHREN ZUM KALIBRIEREN EINER TERAHERTZ-MESSVORRICHTUNG**
TERAHERTZ MEASURING DEVICE AND METHOD FOR CALIBRATING A TERAHERTZ MEASURING DEVICE
DISPOSITIF DE MESURE TÉRAHERTZ ET PROCÉDÉ D'ÉTALONNAGE D'UN DISPOSITIF DE MESURE TÉRAHERTZ

(43) Veröffentlichungstag der Anmeldung: 30.04.2025
(73) Patentinhaber: SIKORA AG, 28307 Bremen (DE)
(72) Erfinder: Miesner, Sebastian, 28879 Grasberg (DE); Sikora, Harald, 28537 Bemen (DE)
(74) Vertreter: Hauck Patent- und Rechtsanwälte PartmbB

(56) Entgegenhaltungen:
- DE-A1- 102020 116 810
- SCHREINER N ET AL: "Mobile Handheld FMCW Terahertz Multilayer Thickness Inspection", 2019 44TH INTERNATIONAL CONFERENCE ON INFRARED, MILLIMETER, AND TERAHERTZ WAVES (IRMMW-THZ), IEEE, 1 September 2019 (2019-09-01), pages 1 - 2, XP033636756, DOI: 10.1109/IRMMW-THZ.2019.8873942

## Beschreibung

Die Erfindung betrifft eine Terahertz-Messvorrichtung zum Messen der Wanddicke eines Gegenstands, wobei die Terahertz-Messvorrichtung einen mit einem Drehring oder entlang eines Drehrings um einen den Gegenstand während einer Messung aufnehmenden Messbereich drehbaren Terahertz-Sender und einen mit dem Drehring oder entlang des Drehrings um den Messbereich drehbaren Terahertz-Empfänger aufweist, der von dem Terahertz-Sender auf den Gegenstand ausgesendete Terahertz-Strahlung nach Reflektion durch einen im Messbereich angeordneten Gegenstand empfängt, und wobei die Terahertz-Messvorrichtung weiterhin eine Auswerteeinrichtung umfasst, die ausgebildet ist, aus den Messdaten des Terahertz-Empfängers eine Wanddicke des Gegenstands zu bestimmen.

Die Erfindung betrifft außerdem ein Verfahren zum Kalibrieren einer Terahertz-Messvorrichtung zum Messen der Wanddicke eines Gegenstands, wobei die Terahertz-Messvorrichtung einen mit einem Drehring oder entlang eines Drehrings um einen den Gegenstand während einer Messung aufnehmenden Messbereich drehbaren Terahertz-Sender und einen mit dem Drehring oder entlang des Drehrings um den Messbereich drehbaren Terahertz-Empfänger aufweist, der von dem Terahertz-Sender auf den Gegenstand ausgesendete Terahertz-Strahlung nach Reflektion durch einen im Messbereich angeordneten Gegenstand empfängt, und wobei die Terahertz-Messvorrichtung weiterhin eine Auswerteeinrichtung umfasst, die ausgebildet ist, aus den Messdaten des Terahertz-Empfängers eine Wanddicke des Gegenstands zu bestimmen.

Mit Terahertz-Messvorrichtungen können Geometrieparameter, wie Wanddicken, von für Terahertz-Strahlung zumindest teiltransparenten Gegenständen, zum Beispiel Kunststoffrohren, mit hoher Genauigkeit auch in schwierigen Messumgebungen gemessen werden. Dazu wird von dem Terahertz-Sender Terahertz-Strahlung auf den Gegenstand ausgesendet, die von Grenzflächen des Gegenstands reflektiert wird. Die reflektierte Terahertz-Strahlung wird von dem Terahertz-Empfänger empfangen. Eine Auswerteeinrichtung ermittelt beispielsweise anhand einer Auswertung der Laufzeiten der unterschiedlichen Strahlungsanteile die Wanddicke des Gegenstands.

Solche Terahertz-Messvorrichtungen kommen zum Messen von in Extrusionsvorrichtungen extrudierten Gegenständen, wie Kunststoffrohren, zum Einsatz. Dabei ist eine Messung von Geometrieparametern des Gegenstands bereits kurz nach Austritt aus der Extrusionsvorrichtung möglich. Auch ist es aus WO 2016/139155 A1 bekannt, aus der empfangenen Terahertz-Strahlung den Brechungsindex des Materials des Gegenstands zu bestimmen. Für eine umfassende Vermessung des Gegenstands, beispielsweise eines Rohrs über seinen Umfang, können der Terahertz-Sender und der Terahertz-Empfänger synchron mit einem Drehring oder entlang eines Drehrings der Terahertz-Messvorrichtung um den Gegenstand, zum Beispiel das Rohr, rotiert werden. Dabei kann kontinuierlich oder in Abständen mehrfach zum Beispiel die Wanddicke und/oder der Außendurchmesser und/oder der Innendurchmesser des Rohrs über den Umfang vermessen werden. Damit können auch Ovalitäten oder Abweichungen zum Beispiel der Wanddicke über den Umfang, verursacht zum Beispiel durch Sagging, also ein schwerkraftbedingtes Absacken noch schmelzfähiger Anteile des Rohrs während des Erstarrungsvorgangs, erkannt werden. Gegebenenfalls kann auf dieser Grundlage steuernd in die Extrusionsvorrichtung eingegriffen werden.

Derartige Terahertz-Messvorrichtungen müssen vor Aufnahme des Betriebs, in der Regel auch in regelmäßigen Abständen während des Betriebs, kalibriert werden, zum Beispiel nach der Norm ISO 9001. Bislang werden hierzu zylinder- oder rohrförmige Kalibriergegenstände hergestellt und vor einem Kalibriervorgang durch ein Zertifizierungsbüro hinsichtlich zum Beispiel der Wanddicke vermessen. Ein solcher zum Beispiel rohrförmiger Kalibriergegenstand wird möglichst zentral in den durch den Drehring begrenzten Messbereich der Terahertz-Messvorrichtung eingesetzt und die Terahertz-Messvorrichtung misst die Wanddicke des Kalibriergegenstands in der oben erläuterten Weise. Die Messergebnisse können mit den zuvor zertifizierten Werten für die Wanddicke verglichen werden und die Terahertz-Messvorrichtung kann auf dieser Grundlage kalibriert werden.

Diese Art des Kalibrierens bringt einige Probleme mit sich. Zunächst besteht ein Problem darin, dass sich entsprechende Kalibrierrohre zum Beispiel aus einem formbeständigen Glaswerkstoff weder über den Umfang noch in Längsrichtung mit einer ausreichend präzisen und gleichförmigen Wanddicke herstellen lassen. Diesbezüglich ist zu beachten, dass oben erläuterte Terahertz-Messvorrichtungen eine Messgenauigkeit mit einer Toleranz im Bereich von wenigen Mikrometern, insbesondere weniger als 5 µm, erreichen. Da die Herstellung von Kalibrierrohren mit einer konstant hohen Genauigkeit in diesem Toleranzbereich praktisch nicht möglich ist, führen geringfügige Positionierabweichungen des Kalibrierrohrs in der Terahertz-Messvorrichtung, sei dies eine geringfügige Verdrehung oder Verschiebung in Längsrichtung, zu entsprechenden Abweichungen der durch die Terahertz-Messvorrichtung gemessenen Wanddicke. Dies macht den Kalibriervorgang außerordentlich schwierig und aufwendig. Beispielsweise für Kunden, die solche Terahertz-Messvorrichtungen im laufenden Betrieb zum Messen von Geometrieparametern von zum Beispiel extrudierten Rohren einsetzen, ist es damit praktisch nicht möglich, die Kalibrierung selbst durchzuführen. Dies erhöht den Aufwand für Kunden, die in der Regel in regelmäßigen Abständen Kalibrierzertifikate zum Beispiel gemäß der Norm ISO 9001 vorlegen müssen. Hierzu müssen Sie häufig auf den Hersteller der entsprechenden Terahertz-Messvorrichtung zurückgreifen.

Hinzu kommt, dass aufgrund der großen Herstelltoleranzen solcher Kalibrierrohre Zertifizierungsbüros nur Messergebnisse mit Toleranzen im Bereich von +/- 50 µm zertifizieren. Angesichts der mindestens um den Faktor 10 besseren Messgenauigkeit der Terahertz-Messvorrichtung sind solche Toleranzen für den Kalibriervorgang ungeeignet. Es wären vielmehr zertifizierte Messdaten mit Toleranzen in einem Bereich von +/- 1 µm erforderlich bzw. wünschenswert.

Aus DE 10 2020 116 810 A1 ist ein Terahertz-Messverfahren zum Vermessen eines Rohrs aus einem Kunststoff oder Gummi bekannt, dessen Brechungsindex nicht als bekannt vorausgesetzt wird. Zum Ermitteln der geometrischen Wanddicke des Rohrs werden in einem der Messung vorausgehenden Kalibrierschritt eine Leerlaufstrecke, d.h. der Abstand zwischen zwei eingesetzten Terahertz-Sensoren, und die Leerlaufzeit als Laufzeit der Terahertzstrahlung in der Leerlaufstrecke bestimmt. Hierzu wird ein beidseitiger Kalibrier-Reflektor in dem Messbereich positioniert, so dass seine beiden Seitenflächen senkrecht zur optischen Achse der Terahertz-Sensoren stehen. Der Kalibrier-Reflektor kann beispielsweise ein Präzisionsblech mit sehr genau bekannter Dicke sein. Nachfolgend geben der erste und gegenüberliegende zweite Terahertz-Sensor jeweils Terahertzstrahlung auf den Kalibrier-Reflektor und die dem jeweiligen Terahertz-Sensor zugewandte Seitenfläche des Kalibrier-Reflektors reflektiert die Terahertzstrahlung zurück zu dem jeweiligen Terahertz-Sensor. Auf diese Weise werden zwei Leerlauf-Teilzeiten von den Terahertz-Sensoren zu der diesen jeweils zugewandten Seitenfläche des Kalibrier-Reflektors bestimmt. Die Leerlaufzeit zwischen den Terahertz-Sensoren wird durch Summierung der beiden Leerlauf-Teilzeiten und der bekannten Dicke des Kalibrier-Reflektors bestimmt. Unter Berücksichtigung der so bestimmten Leerlaufzeit kann bei einer anschließenden Vermessung des Rohrs die Wanddicke auch bei nicht bekanntem Brechungsindex bestimmt werden.

SCHREINER N ET AL: "Mobile Handheld FMCW Terahertz Multilayer Thickness Inspection", 2019 44TH INTERNATIONAL CONFERENCE ON INFRARED, MILLIMETER, AND TERAHERTZ WAVES (IRMMW-THZ), IEEE, 1. September 2019 (2019-09-01), Seiten 1-2, XP033636756, DOI: 10.1109/IRMMW-THZ.2019.8873942 beschreibt ein mobiles Handheldgerät zur Terahertz-Vermessung mehrschichtiger Strukturen, umfassend einen FMCW Terahertz-Transceiver. Im Rahmen einer Verifizierung des Handheldgeräts wurden mit beiden Messvorrichtungen Wanddicken unterschiedlicher Gegenstände bekannter Wanddicke vermessen und die Messergebnisse der Messvorrichtungen verglichen.

Ausgehend von dem erläuterten Stand der Technik liegt der Erfindung daher die Aufgabe zugrunde, eine Terahertz-Messvorrichtung und ein Verfahren der eingangs genannten Art bereitzustellen, mit denen das Kalibrieren einer Terahertz-Messvorrichtung in präziserer und einfacherer Weise möglich ist, insbesondere auch für die Terahertz-Messvorrichtung im laufenden Betrieb einsetzende Kunden.

Die Erfindung löst die Aufgabe durch die unabhängigen Ansprüche 1 und 18. Vorteilhafte Ausgestaltungen finden sich in den abhängigen Ansprüchen, der Beschreibung und den Figuren.

Für eine Terahertz-Messvorrichtung löst die Erfindung die Aufgabe dadurch,
- dass ein für die von dem Terahertz-Sender ausgesendete Terahertz-Strahlung zumindest teiltransparenter plattenförmiger Kalibriergegenstand mit bekannter Wanddicke innerhalb des Drehrings angeordnet ist,
- dass der Terahertz-Sender in eine Drehposition bringbar ist, so dass der Terahertz-Sender Terahertz-Strahlung entlang einer vertikalen Hauptstrahlrichtung auf den Kalibriergegenstand aussendet,
- dass der Terahertz-Empfänger in eine Drehposition bringbar ist, so dass der Terahertz-Empfänger von Grenzflächen des Kalibriergegenstands reflektierte und/oder den Kalibriergegenstand durchstrahlende Terahertz-Strahlung empfängt,
- dass die Auswerteeinrichtung ausgebildet ist, aus den Messdaten des Terahertz-Empfängers die Wanddicke des Kalibriergegenstands zu bestimmen, und anhand
- eines Vergleichs der bestimmten Wanddicke mit der bekannten Wanddicke des Kalibriergegenstands die Terahertz-Messvorrichtung zu kalibrieren.

Für ein Verfahren der eingangs genannten Art löst die Erfindung die Aufgabe durch die Schritte:
- ein für die von dem Terahertz-Sender ausgesendete Terahertz-Strahlung zumindest teiltransparenter plattenförmiger Kalibriergegenstand mit bekannter Wanddicke wird innerhalb des Drehrings angeordnet,
- der Terahertz-Sender wird in eine Drehposition gebracht, so dass der Terahertz-Sender Terahertz-Strahlung entlang einer vertikalen Hauptstrahlrichtung auf den Kalibriergegenstand aussendet,
- der Terahertz-Empfänger wird in eine Drehposition gebracht, so dass der Terahertz-Empfänger von Grenzflächen des Kalibriergegenstands reflektierte und/oder den Kalibriergegenstand durchstrahlende Terahertz-Strahlung empfängt,
- durch die Auswerteeinrichtung wird aus den Messdaten des Terahertz-Empfängers die Wanddicke des Kalibriergegenstands bestimmt, und anhand eines Vergleichs der durch die Auswerteeinrichtung bestimmten Wanddicke mit der bekannten Wanddicke des Kalibriergegenstands wird die Terahertz-Messvorrichtung kalibriert.

Die erfindungsgemäße Terahertz-Messvorrichtung arbeitet im Betrieb wie oben zum Stand der Technik erläutert. Von dem mit dem Drehring oder entlang des Drehrings drehbaren Terahertz-Sender wird Terahertz-Strahlung auf einen im Messbereich angeordneten Gegenstand, zum Beispiel ein in einer Extrusionsvorrichtung extrudiertes Kunststoffrohr, ausgesendet. Die Terahertz-Strahlung dringt in den für die Strahlung zumindest teiltransparenten Gegenstand ein und wird an dessen Grenzflächen reflektiert. Sie kann den Gegenstand auch durchstrahlen. Die reflektierten und/oder den Gegenstand durchstrahlenden Strahlungsanteile werden von dem synchron mit dem Terahertz-Sender drehenden Terahertz-Empfänger empfangen und die Messdaten der Auswerteeinrichtung zugeführt. Auf dieser Grundlage ermittelt die Auswerteeinrichtung die Wanddicke und gegebenenfalls weitere geometrische Parameter, wie Außen- und/oder Innendurchmesser oder Ovalität des Gegenstands, zum Beispiel des Rohrs. Der Terahertz-Sender und der Terahertz-Empfänger können während der Messung um den Gegenstand gedreht werden, insbesondere um den Umfang eines zu vermessenden Rohrs. Dabei kann der Terahertz-Sender kontinuierlich oder mehrfach nacheinander Terahertz-Strahlung auf den Gegenstand aussenden, die entsprechend von dem Terahertz-Empfänger nach Reflektion an den Grenzflächen des Gegenstands und/oder nach Durchstrahlen des Gegenstands empfangen und durch die Auswerteeinrichtung in der erläuterten Weise ausgewertet wird. Auf diese Weise können die Geometrieparameter über den Umfang des Gegenstands, zum Beispiel des Rohrs, ermittelt werden. Die von dem Terahertz-Sender ausgesendete Terahertz-Strahlung kann beispielsweise eine Frequenz in einem Bereich von 1 GHz bis 10 THz besitzen. Dabei handelt es sich um die Grundfrequenz, um die herum die Terahertz-Strahlung in der Regel eine gewisse Bandbreite aufweist.

Erfindungsgemäß ist bzw. wird ein für die Terahertz-Strahlung zumindest teiltransparenter plattenförmiger Kalibriergegenstand innerhalb des Drehrings angeordnet. Wie unten noch näher erläutert wird, kann der Kalibriergegenstand für einen Kalibriervorgang in dem Drehring angeordnet werden. Er kann lösbar in dem Drehring angeordnet sein. Es ist aber auch möglich, dass er dauerhaft bzw. fest in dem Drehring angeordnet ist. Der Kalibriergegenstand kann beispielsweise an der Innenseite des Drehrings oder an der Innenseite oder innerhalb eines Gehäuses des Drehrings angeordnet sein. Der Kalibriergegenstand kann zum Beispiel eine runde Form besitzen, insbesondere kreisförmig ausgebildet sein, oder beispielsweise eine rechteckige, insbesondere quadratische Form besitzen. Die Wanddicke des Kalibriergegenstands ist bekannt. Sie kann beispielsweise vorab durch ein Zertifizierungsbüro ermittelt worden sein. Der Terahertz-Sender wird in eine Drehposition gebracht, insbesondere durch Drehung des Drehrings oder des Terahertz-Senders entlang des Drehrings, in der er Terahertz-Strahlung entlang einer vertikalen Hauptstrahlrichtung auf den Kalibriergegenstand aussendet, beispielsweise vertikal von oben nach unten oder umgekehrt. Soweit die von dem Terahertz-Sender ausgesendete Terahertz-Strahlung einen Öffnungswinkel aufweist, entspricht die Hauptstrahlrichtung dem Mitten- oder Zentralstrahl bzw. der Mittenrichtung des ausgesendeten Strahlungswinkels bzw. Strahlungskegels. Der Terahertz-Empfänger wird in eine Drehposition gebracht, in der er die von dem Terahertz-Sender ausgesendete Terahertz-Strahlung nach deren Reflektion an den Grenzflächen des Kalibriergegenstands und/oder nach Durchstrahlen des Kalibriergegenstands als Messdaten empfängt. Terahertz-Sender und Terahertz-Empfänger können beispielsweise einander gegenüberliegend an dem Drehring angeordnet sein und durch Drehung des Drehrings synchron drehbar sein, so dass der Terahertz-Empfänger dem Terahertz-Sender in jeder Drehposition gegenüberliegt. Der Terahertz-Empfänger empfängt die von dem Terahertz-Sender auf den Gegenstand ausgesendete Terahertz-Strahlung nach Durchstrahlen des Kalibriergegenstands. Auch denkbar ist es, dass der Terahertz-Sender und der Terahertz-Empfänger im Wesentlichen am selben Ort angeordnet sind, wie unten näher erläutert wird. In diesem Fall empfängt der Terahertz-Empfänger die von dem Terahertz-Sender ausgesendete Terahertz-Strahlung nach Reflektion an den Grenzflächen des Kalibriergegenstands. Weiter kann in diesem Fall, wie ebenfalls unten näher erläutert wird, an einem dem Terahertz-Sender und dem am selben Ort angeordneten Terahertz-Empfänger gegenüberliegenden Ort des Drehrings ein Reflektor für die von dem Terahertz-Sender ausgesendete Terahertz-Strahlung angeordnet sein, der diese nach gegebenenfalls mehrfacher Reflektion an Grenzflächen des Gegenstands zurück zu dem am selben Ort wie dem Terahertz-Sender angeordneten Terahertz-Empfänger reflektiert.

Die Auswerteeinrichtung bestimmt aus den Messdaten des Terahertz-Empfängers in der oben erläuterten Weise die Wanddicke des Kalibriergegenstands. Insbesondere kann die Auswerteeinrichtung hierzu die Laufzeiten der an den Grenzflächen des Gegenstands reflektierten Terahertz-Strahlung auswerten. Sofern der Terahertz-Sender an einem dem Terahertz-Empfänger gegenüberliegenden Ort des Drehrings angeordnet ist, kann die Auswerteeinrichtung eine Laufzeitveränderung auswerten, die durch den im Strahlengang angeordneten Kalibriergegenstand gegenüber ohne im Strahlengang angeordnetem Kalibriergegenstand verursacht wird. Bei bekanntem oder bestimmtem Brechungsindex kann hieraus ebenfalls die Wanddicke bestimmt werden. Die Auswerteeinrichtung vergleicht die so bestimmte Wanddicke mit der bekannten, beispielsweise durch ein Zertifizierungsbüro ermittelten und bereitgestellten Wanddicke des Kalibriergegenstands. Auf dieser Grundlage kalibriert die Auswerteeinrichtung die Terahertz-Messvorrichtung.

Die Auswerteeinrichtung bildet erfindungsgemäß also eine Auswerte- und Kalibriereinrichtung. Sie kann einteilig oder mehrteilig aufgebaut sein. Beispielsweise kann das Kalibrieren der Terahertz-Messvorrichtung von einem anderen Teil der Auswerteeinrichtung ausgeführt werden als die Wanddickenbestimmung. Die Auswerteeinrichtung kann am Ort der Terahertz-Messvorrichtung oder an einem von dieser getrennten Ort ausgebildet sein. Sofern Sie mehrteilig aufgebaut ist, kann auch ein Teil, zum Beispiel der Teil, der die Wanddickenbestimmung ausführt, am Ort der Terahertz-Messvorrichtung ausgebildet sein, und ein anderer Teil, zum Beispiel der Teil, der die Kalibrierung durchführt, an einem von der Terahertz-Messvorrichtung getrennten Ort ausgebildet sein.

Der erfindungsgemäß verwendete Kalibriergegenstand ist plattenförmig, insbesondere plan und eben ausgebildet. Die die zu messende Wand begrenzenden Grenzflächen des Kalibriergegenstands sind insbesondere planparallel ausgebildet. Wie erläutert, kann die Wanddicke des Kalibriergegenstands aus einer externen Messung bekannt sein, zum Beispiel durchgeführt durch ein Zertifizierungsbüro gemäß der Norm ISO 9001. Die erfindungsgemäße Kalibrierung erfüllt ebenfalls die Anforderungen der Norm ISO 9001. Ein entsprechendes Kalibrierzertifikat gemäß ISO 9001 kann ausgestellt werden.

Der plattenförmige Kalibriergegenstand kann beispielsweise im zum Beispiel durch die Drehposition des Drehrings vorgegebenen unteren Bereich des Drehrings, insbesondere am tiefsten Ort des Drehrings, in diesen eingelegt werden. Der Drehring kann ein feststehendes Gehäuse aufweisen, in das bzw. auf das der Kalibriergegenstand eingelegt werden kann. Dies ermöglicht eine einfache schwerkraftbedingte Anordnung und Lagerung. Wie bereits erläutert, kann der Terahertz-Sender und gegebenenfalls der am selben Ort angeordnete Terahertz-Empfänger von einem zum Beispiel durch die Drehposition des Drehrings vorgegebenen oberen Bereich des Drehrings, insbesondere dem höchsten Ort des Drehrings, Terahertz-Strahlung vertikal von oben nach unten auf den Kalibriergegenstand aussenden. Auch möglich ist eine umgekehrte Anordnung, bei der der Terahertz-Sender und gegebenenfalls der am selben Ort angeordnete Terahertz-Empfänger von einem unteren Bereich des Drehrings, insbesondere dem tiefsten Ort des Drehrings, Terahertz-Strahlung vertikal von unten nach oben auf den Kalibriergegenstand aussenden. Wie noch näher erläutert wird, kann am gegenüberliegenden Ort des Drehrings ein Reflektor für die Terahertz-Strahlung angeordnet sein. Ein Vorteil dieser Anordnung ist, dass im Bereich des Terahertz-Senders bzw. des Terahertz-Transceivers der Abstrahlwinkel im Wesentlichen auf sein Nahfeld begrenzt ist. Der oder die Kalibriergegenstände können deshalb deutlich geringere Abmessungen aufweisen als bei der umgekehrten Anordnung. Beispielsweise sind Kalibriergegenstände mit einem Durchmesser von 100 mm bei kreisförmiger Ausführung bzw. bei quadratischer Ausführung von 100 mm x 100 mm denkbar.

Die erfindungsgemäße Verwendung eines plattenförmigen Kalibriergegenstands bringt mehrere Vorteile mit sich. Ein plattenförmiger Kalibriergegenstand ist im Vergleich zu zylinder- oder rohrförmigen Kalibriergegenständen im Übrigen mit einer wesentlich höheren Genauigkeit und Gleichmäßigkeit der Wanddicke herstellbar. Die eingangs erläuterte Wanddickentoleranz im Bereich von +/- 1 µm kann mit einem plattenförmigen Kalibriergegenstand auch zum Beispiel aus Glas im Gegensatz zu einem zylinder- oder rohrförmigen Kalibriergegenstand zuverlässig erreicht werden. Damit kann auch durch ein Zertifizierungsbüro die bei dem erfindungsgemäßen Vergleich für die Kalibrierung herangezogene bekannte Wanddicke mit ausreichend großer Genauigkeit zertifiziert bereitgestellt werden. Etwaige Lageabweichungen, zum Beispiel in Längsrichtung im Messbereich des Kalibriergegenstands, wirken sich im Gegensatz zu zylinder- oder rohrförmigen Kalibriergegenständen nicht relevant auf das Messergebnis und damit die Kalibrierung aus. Die Ausrichtung der Terahertz-Messvorrichtung, insbesondere des Terahertz-Senders und des Terahertz-Empfängers in Bezug auf den in den Drehring eingelegten Kalibriergegenstand lässt sich durch die erfindungsgemäße Drehbarkeit von Terahertz-Sender und Terahertz-Empfänger zuverlässig und problemlos so einstellen, dass die Terahertz-Strahlung entlang einer vertikalen Hauptstrahlrichtung auf den Gegenstand trifft. Wie unten näher erläutert wird, kann die Positioniergenauigkeit des Kalibriergegenstands innerhalb des Drehrings beispielsweise durch Markierungen oder mechanische Halterungen oder Halteeinrichtungen präzise vorgegeben werden.

In Kombination ermöglichen diese Merkmale der erfindungsgemäßen Terahertz-Messvorrichtung ein Kalibrieren in einfacher und präziser Weise insbesondere auch für Kunden, die die Terahertz-Messvorrichtung im laufenden Betrieb zum Messen von Geometrieparametern von Gegenständen einsetzen. Damit sind auch regelmäßige Kalibrierzertifikate gemäß ISO 9001 problemlos möglich.

Dies gilt insbesondere im Gegensatz zu Terahertz-Messvorrichtungen, die über den Umfang des Messbereichs eine Mehrzahl von stationär angeordnete Terahertz-Sendern und Terahertz-Empfängen aufweisen. Eine Kalibrierung insbesondere der nicht entlang der Vertikalen aussendenden Terahertz-Sender ist dann mit den eingangs erläuterten Problemen behaftet.

Die im unabhängigen Verfahrensanspruch beanspruchten Verfahrensschritte müssen nicht zwingend in der dortigen Reihenfolge durchgeführt werden. Beispielsweise können der Terahertz-Sender und/oder der Terahertz-Empfänger bereits vor oder gleichzeitig zu dem Anordnen des Kalibriergegenstands in dem Drehring in ihre jeweilige Drehposition für die Kalibriermessung gebracht werden.

Der Kalibriergegenstand kann nach einer Ausgestaltung aus einem Glas bestehen. Auch möglich wäre ein Kalibriergegenstand aus einer Keramik. Der Einsatz eines Glas- oder Keramikwerkstoffs ist gegenüber einem Kunststoffwerkstoff bevorzugt, da Kunststoffe in der Regel nicht ausreichend formbeständig sind. Zwar verhält sich ein Glas- oder Keramikwerkstoff bezüglich seines Brechungsindex anders als übliche Kunststoffe, die beispielsweise einen mittleren Brechungsindex von ungefähr 1,5 besitzen, während zum Beispiel ein Glaswerkstoff einen Brechungsindex von beispielsweise etwa 2,1 besitzen kann. Dennoch kann mit einem Kalibriergegenstand aus Glas oder Keramik die Messgenauigkeit und die Wiederholgenauigkeit der Terahertz-Messvorrichtung zuverlässig abgeleitet werden. Auch ein Kunststoff wäre als Material denkbar, sofern dieser eine ausreichende Formbeständigkeit aufweist. Beispielhaft genannt sei Pertinax.

Gemäß einer besonders praxisgemäßen Ausgestaltung können der Terahertz-Sender und der Terahertz-Empfänger durch einen Terahertz-Transceiver ausgebildet sein. Ein Terahertz-Transceiver integriert einen Terahertz-Sender und einen Terahertz-Empfänger zu einem Bauteil, so dass der Terahertz-Sender und der Terahertz-Empfänger am selben Ort angeordnet sind. Der Terahertz-Transceiver ist dann mit dem Drehring oder entlang des Drehrings drehbar.

Weiterhin kann ein dem Terahertz-Sender gegenüberliegender Reflektor für Terahertz-Strahlung vorgesehen sein, der von dem Terahertz-Sender ausgesendete Terahertz-Strahlung zurück zu dem Terahertz-Empfänger reflektiert. Der Reflektor kann mit dem Drehring oder entlang des Drehrings um den Messbereich drehbar sein. Der Reflektor kann insbesondere gegenüberliegend zu einem Terahertz-Transceiver am Drehring angeordnet sein. Der Reflektor reflektiert die von dem Terahertz-Sender ausgesendete Terahertz-Strahlung, insbesondere die den Gegenstand gegebenenfalls nach Mehrfachreflektionen an den Grenzflächen des Gegenstands durchstrahlende Terahertz-Strahlung, zumindest teilweise zurück zu dem Gegenstand und nach erneutem Durchstrahlen des Gegenstands, gegebenenfalls nach erneuter mehrfacher Reflektion an den Grenzflächen, zumindest teilweise zurück zu dem Terahertz-Empfänger. Der Reflektor kann synchron mit dem Terahertz-Sender und dem Terahertz-Empfänger bzw. dem Terahertz-Transceiver mit bzw. auf dem Drehring drehen, so dass er in jeder Drehposition des Terahertz-Senders und des Terahertz-Empfängers bzw. des Terahertz-Transceivers diesen gegenüberliegt und von dem Terahertz-Sender ausgesendete Strahlung zurück zu dem Empfänger reflektiert.

Es ist mit der vorgenannten Ausgestaltung auch möglich, den Brechungsindex eines in dem Messbereich angeordneten Gegenstands oder auch des Kalibriergegenstands zu bestimmen. Auf diese Weise kann zuverlässig ein Zusammenhang hergestellt werden zwischen dem Material des Kalibriergegenstands und dem regelmäßig unterschiedlichen Material eines später mit der Terahertz-Messvorrichtung zu vermessenden Gegenstands, zum Beispiel eines extrudierten Kunststoffgegenstands, wie eines Rohrs. Beispielsweise kann der Brechungsindex bestimmt werden aus einem Vergleich der Laufzeit der von dem Terahertz-Sender ausgesendeten Terahertz-Strahlung durch den Messbereich bei in dem Messbereich angeordnetem Gegenstand bzw. Kalibriergegenstand mit der Laufzeit der Terahertz-Strahlung durch den Messbereich ohne darin angeordneten Gegenstand bzw. Kalibiergegenstand, wie dies beispielsweise in WO 2016/139155 A1 beschrieben ist.

Nach einer weiteren Ausgestaltung kann der Reflektor den Kalibriergegenstand bilden. Der Reflektor ist dann zumindest teiltransparent für die Terahertz-Strahlung. Seine Wanddicke ist ebenfalls bekannt bzw. kann gegebenenfalls durch ein Zertifizierungsbüro gemessen werden. Gleichzeitig bietet der plattenförmige Reflektor ausreichende Reflektionseigenschaften für die Terahertz-Strahlung, so dass er die oben erläutere Reflektionsfunktion erfüllen kann. Der Reflektor kann zum Beispiel aus einem Glaswerkstoff bestehen, wie für den Kalibriergegenstand erläutert. Diese Ausgestaltung ist von besonderem Vorteil, insofern, als nun eine kalibrierte Wanddicke stets zur Messung vorhanden ist. Auch wenn der Terahertz-Sender und Terahertz-Empfänger bzw. Terahertz-Transceiver rotiert, wird dieser Wanddickenwert sicherstellen, dass alle erfassten Messwerte von höchster Präzision sind. Natürlich ist es auch denkbar, dass der Reflektor mit einem weiteren Kalibriergegenstand kombiniert wird, wie unten näher erläutert. Der Reflektor kann dabei sowohl fest in der Terahertz-Messvorrichtung installiert sein als auch lösbar in dieser angeordnet sein. Ein fest eingebauter Reflektor als Kalibriergegenstand hat den Vorteil einer kontinuierlichen Sicherstellung der Messgenauigkeit. Alternativ kann der Reflektor durch lösbare Anordnung austauschbar sein, so dass ein Betreiber der Terahertz-Messvorrichtung diesen in gewünschten Abständen bezüglich seiner Abmessungen durch ein Zertifizierungsbüro bestätigen lassen möchte. Damit könnte die Norm ISO 9001 erfüllt werden.

Gemäß einer weiteren Ausgestaltung kann an dem Drehring eine Markierung zur Aufnahme des Kalibriergegenstands vorgesehen sein. Die Markierung kann an einem feststehenden Gehäuse des Drehrings angeordnet sein. Sie zeigt an, wie eine Bedienperson den Kalibriergegenstand in die Terahertz-Messvorrichtung einlegen muss, so dass dieser für die Kalibriermessung korrekt positioniert und ausgerichtet ist. Dies vereinfacht die Nutzung auch für weniger geübte Bedienpersonen.

Nach einer weiteren Ausgestaltung kann an dem Drehring eine Halterung, insbesondere eine mechanische Halterung, zur Aufnahme des Kalibriergegenstands vorgesehen sein. Wiederum kann diese an einem Gehäuse des Drehrings angeordnet sein. Die Halterung vereinfacht die Positionierung des Kalibriergegenstands weiter. Die Halterung kann zum Beispiel einen oder mehrere Vorsprünge aufweisen, die eine definierte Lage des Kalibriergegenstands begrenzen, so dass dieser in einfacher Weise zwischen den oder die Vorsprünge eingelegt werden kann. Beispielsweise kann der Vorsprung seitliche Begrenzungen für den einzulegenden Kalibriergegenstand aufweisen. Damit ist zuverlässig und unveränderbar die korrekte Positionierung des Kalibriergegenstands gegeben.

Auch möglich als Halterung ist das Einlegen eines Halterohrs oder Haltezylinders, beispielsweise aus Kunststoff, in den Drehring und das Auflegen des Kalibriergegenstands auf dieses Halterohr bzw. diesen Haltezylinder. Das Halterohr bzw. der Haltezylinder kann mit seiner Längsachse vertikal ausgerichtet werden. Besonders vorteilhaft ist, wenn ein Innendurchmesser eines Halterohrs etwa der Breite eines an der Unterseite des Drehrings angeordneten Fensters oder Reflektors entspricht. Dann kann das Halterohr auf das Fenster bzw. den Reflektor aufgeschoben werden. Damit wird das Halterohr ausgerichtet und zentriert und auch ein auf das Halterohr aufgelegter Kalibriergegenstand wird präzise im rechten Winkel zu der Hauptstrahlrichtung der Terahertz-Strahlung ausgerichtet.

Die Halterung kann auch einen Boden zur Aufnahme des Kalibriergegenstands aufweisen, so dass die Halterung gleichzeitig einen Abstandhalter gegenüber dem Terahertz-Sender und/oder Terahertz-Empfänger bzw. dem Terahertz-Transceiver oder dem Reflektor bildet.

Nach einer besonders praxisgemäßen Ausgestaltung kann die Halterung aus einem Schaumstoff bestehen. Ein solcher Schaumstoff lässt sich problemlos einlegen ohne Beschädigungsgefahr für Komponenten der Terahertz-Messvorrichtung und beeinflusst dabei die Messung nicht, da er für Terahertz-Strahlung transparent ist.

Nach einer weiteren Ausgestaltung kann vorgesehen sein, dass ein zweiter für die von dem Terahertz-Sender ausgesendete Terahertz-Strahlung zumindest teiltransparenter plattenförmiger Kalibriergegenstand mit bekannter Wanddicke innerhalb des Drehrings parallel und mit Abstand zu dem (ersten) Kalibriergegenstand angeordnet ist. Auf diese Weise kann die von der Terahertz-Messvorrichtung üblicherweise vorgenommene Messung zweier Wanddicken eines Rohrs nachgebildet werden. Die Auswertesoftware der Auswerteeinrichtung muss dann für die Kalibriermessung in einfacher Weise nicht angepasst werden. Der zweite Kalibriergegenstand kann identisch ausgebildet sein zum (ersten) Kalibriergegenstand. Denkbar ist aber auch eine unterschiedliche Ausgestaltung, zum Beispiel unterschiedliche Wanddicken des (ersten) und zweiten Kalibriergegenstands. Dabei kann auf zum Beispiel parallelen Grenzflächen der beiden Kalibriergegenstände, zum Beispiel auf einander abgewandten äußeren Grenzflächen, auch eine Abstandsmessung mit der Terahertz-Strahlung erfolgen, entsprechend einer Durchmessermessung eines Rohrs.

Die Halterung kann einen Abstandhalter zwischen dem (ersten) Kalibriergegenstand und dem zweiten Kalibriergegenstand umfassen. Der Abstandhalter kann zum Beispiel rahmenförmig ausgebildet sein. Er kann einen Freiraum zwischen den Kalibriergegenständen belassen, so dass die Terahertz-Strahlung ohne die Gefahr eines Verfälschens des Messergebnisses durch den Abstandhalter den Freiraum durchlaufen kann. Ein Abstand dient einer eindeutigen getrennten Messung der Wanddicken der beiden Kalibriergegenstände. Die Halterung kann in besonders praxisgemäßer Weise auch den zweiten Kalibriergegenstand aufnehmen.

Auch möglich ist es, dass eine außerhalb des Drehrings und/oder an einem nicht rotierenden Teil der Terahertz-Messvorrichtung angeordnete Halteeinrichtung vorgesehen ist, die den Kalibriergegenstand innerhalb des Drehrings hält. Diese kann auch mit der Halterung kombiniert werden, so dass die Halteeinrichtung die Halterung zur Aufnahme des Kalibriergegenstands hält. Die Halteeinrichtung kann zum Beispiel einen Ständer umfassen, der neben der Terahertz-Messvorrichtung auf dem Boden aufgestellt werden kann. Durch diese Ausgestaltung muss in den Drehring selbst nicht eingegriffen werden. Sie eignet sich auch für eine Nachrüstung bestehender Terahertz-Messvorrichtungen besonders gut.

Der Kalibriergegenstand kann nach einer weiteren Ausgestaltung derart innerhalb des Drehrings angeordnet sein, dass die Grenzflächen der zu vermessenden Wand des Kalibriergegenstands senkrecht zur Vertikalen ausgerichtet sind. Damit ist die Wanddickenmessung bzw. die Auswertung der empfangenen Messdaten besonders einfach. Die Markierung, Halterung bzw. Halteeinrichtung gemäß den vorgenannten Ausgestaltungen kann entsprechend insbesondere so ausgestaltet sein, dass die vorgenannte Anordnung des Kalibriergegenstands mit senkrecht zur Vertikalen ausgerichteten Grenzflächen der Wand gewährleistet ist.

Nach einer weiteren Ausgestaltung können der Terahertz-Sender und/oder der Terahertz-Empfänger außerhalb des Drehrings angeordnet sein, wobei der Drehring ein für die Terahertz-Strahlung zumindest teiltransparentes Fenster aufweist, durch das die Terahertz-Strahlung in den Messbereich und/oder aus dem Messbereich gelangt. Ein solches Fenster dient dem Schutz der Sensorkomponenten, insbesondere des Terahertz-Senders und Terahertz-Empfängers bzw. des Terahertz-Transceivers. Es ist so ausgestaltet, dass es möglichst kein Reflektionssignal der Terahertz-Strahlung erzeugt, das die Messauswertung stören könnte. Das Fenster kann zum Beispiel eine dünne Folie umfassen, beispielsweise eine Kunststofffolie, wie zum Beispiel eine PTFE-Folie, bei der sich Reflektionsechos an der Vorderseite und der Rückseite der Folie gegenseitig auslöschen, beispielsweise weil sich beim Eintritt der Terahertz-Strahlung eine Reflektion ohne Phasendrehung ergibt und beim Austritt aus dem dichteren Medium eine 180° Phasenverschiebung entsteht. Die Folie kann sich in einer Halterung, zum Beispiel einem Flansch, befinden. Der Terahertz-Sender bzw. Terahertz-Empfänger können insbesondere geringfügig außerhalb des Drehrings angeordnet sein. Sie können über eine Verbindungshalterung an dem Drehring gelagert sein, so dass sie mit dem Drehring drehbar sind. Auch der Reflektor kann (geringfügig) außerhalb des Drehrings angeordnet sein und entsprechend über eine Verbindungshalterung an dem Drehring gelagert sein. Der Drehring kann auch im Bereich des Reflektors ein für die Terahertz-Strahlung zumindest teiltransparentes Fenster aufweisen, das ausgestaltet sein kann wie oben erläutert. Selbstverständlich können der Terahertz-Sender und/oder der Terahertz-Empfänger und/ oder der Reflektor auch unmittelbar an dem Drehring gelagert und mit diesem drehbar sein. In diesem Fall ist es beispielsweise möglich zum Schutz des Terahertz-Senders und Terahertz-Empfängers bzw. Reflektors ein für die Terahertz-Strahlung zumindest teiltransparentes Ringfenster innerhalb des Drehrings anzuordnen. Auch das Ringfenster kann so ausgebildet sein, dass es möglichst kein Reflektionssignal der Terahertz-Strahlung erzeugt, das die Messauswertung stören könnte. Es kann insbesondere aufgebaut sein, wie oben zu dem Fenster erläutert. Das Ringfenster kann in besonders praxisgemäßer Weise gleichzeitig eine Auflage für den Kalibriergegenstand bilden. Der den Terahertz-Sender und Terahertz-Empfänger bzw. Terahertz-Transceiver und gegebenenfalls den Reflektor tragende Drehring kann ein U-förmiges Profil aufweisen, so dass er sich mit den freien Enden der Schenkel des U-förmigen Profils auf dem Ringfenster abstützt und/oder das Ringfenster hält.

Die Terahertz-Messvorrichtung kann ein vorzugsweise ringförmiges Gehäuse aufweisen, in dem der Drehring mit den weiteren Komponenten angeordnet ist. Das Gehäuse dient zum Schutz der innerhalb des Gehäuses angeordneten Komponenten, insbesondere des Terahertz-Senders und Terahertz-Empfängers bzw. des Terahertz-Transceivers und gegebenenfalls des Reflektors.

Wie erläutert, kann der Kalibriergegenstand zum Beispiel aus einem Glas bestehen. Er kann insbesondere aus einem Quarzglas oder einem Borosilikatglas bestehen. Solche Glaswerkstoffe sind hinsichtlich der Abmessungen besonders präzise herstellbar, weisen eine besonders hohe Formstabilität auf und können entsprechend sehr genau zertifiziert vermessen werden. Denkbar ist beispielsweise ein Borosilikatglas vom Typ MPAbor aus Borofloat SG. Der Kalibriergegenstand weist eine größtmögliche Oberflächenplanität auf. Die Abmessungen des Kalibriergegenstands sind grundsätzlich entsprechend den Abmessungen der Terahertz-Messvorrichtung, insbesondere des Drehrings, flexibel wählbar. Lediglich beispielhaft seien Abmessungen genannt im Bereich mit einem Durchmesser von bis zu 250 mm bei kreisförmiger Ausführung, oder einer Breite von bis zu 250 mm bei rechteckiger Ausführung oder bei quadratischer Ausführung mit Abmessungen bis zu 250 × 250 mm². Je nach Anordnung des Terahertz-Senders sind aber auch kleinere Abmessungen mit einem Durchmesser bzw. einer Breite von beispielsweise 100 mm bzw. bei quadratischer Ausführung von beispielsweise 100 x 100 mm², möglich. Die Dicke des Kalibriergegenstands kann abhängig von dem jeweiligen Anwendungsfall gewählt werden.

Die Ergebnisse der erfindungsgemäßen Kalibrierung können protokolliert bzw. dokumentiert werden. Auf diese Weise kann eine Historie der Kalibrier-Messwerte erstellt und über einen längeren Zeitraum ausgewertet werden. So können beispielsweise längerfristige Abweichungen von Messkomponenten festgestellt werden.

Das erfindungsgemäße Verfahren kann mit einer erfindungsgemäßen Terahertz-Messvorrichtung durchgeführt werden. Entsprechend kann die erfindungsgemäße Terahertz-Messvorrichtung zum Durchführen des erfindungsgemäßen Verfahrens ausgebildet sein.

Ausführungsbeispiele der Erfindung werden nachfolgend anhand von Figuren näher erläutert. Es zeigen schematisch:
- Fig. 1: eine Terahertz-Messvorrichtung zur Veranschaulichung eines Kalibriervorgangs nach dem Stand der Technik in einer vertikalen Schnittansicht,
- Fig. 2: eine erfindungsgemäße Terahertz-Messvorrichtung zur Veranschaulichung eines erfindungsgemäßen Kalibrierverfahrens in einer vertikalen Schnittansicht nach einem ersten Ausführungsbeispiel,
- Fig. 3: eine erfindungsgemäße Terahertz-Messvorrichtung zur Veranschaulichung eines erfindungsgemäßen Kalibrierverfahrens in einer vertikalen Schnittansicht nach einem zweiten Ausführungsbeispiel,
- Fig. 4: eine erfindungsgemäße Terahertz-Messvorrichtung zur Veranschaulichung eines erfindungsgemäßen Kalibrierverfahrens in einer vertikalen Schnittansicht nach einem dritten Ausführungsbeispiel,
- Fig. 5: eine erfindungsgemäße Terahertz-Messvorrichtung zur Veranschaulichung eines erfindungsgemäßen Kalibrierverfahrens in einer vertikalen Schnittansicht nach einem vierten Ausführungsbeispiel,
- Fig. 6: eine erfindungsgemäße Terahertz-Messvorrichtung zur Veranschaulichung eines erfindungsgemäßen Kalibrierverfahrens in einer vertikalen Schnittansicht nach einem fünften Ausführungsbeispiel, und
- Fig. 7: die Terahertz-Messvorrichtung nach Figur 6 in einer gegenüber Figur 6 um 90° gedrehten Schnittansicht.

Soweit nichts anders angegeben ist, bezeichnen in den Figuren gleiche Bezugszeichen gleiche Gegenstände.

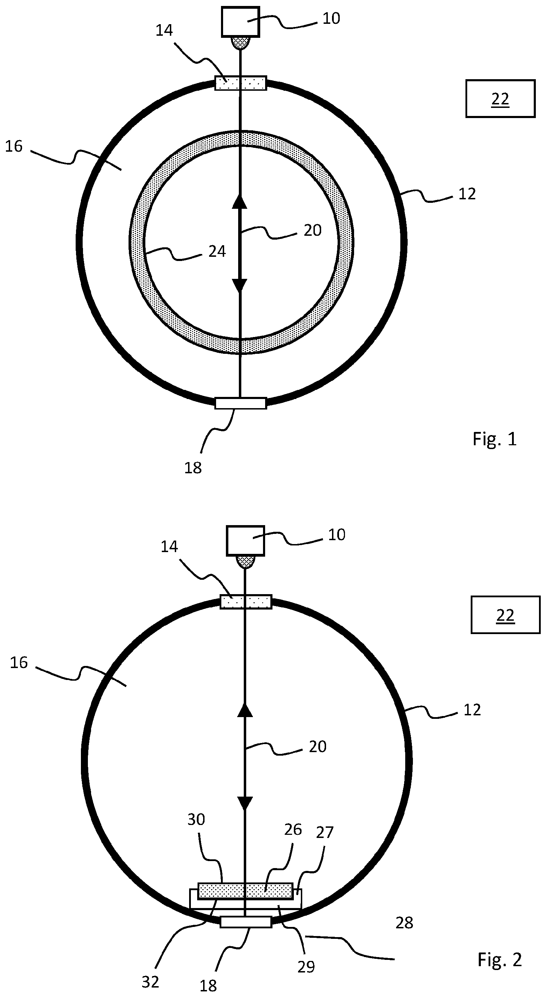

Die in Figur 1 dargestellte Terahertz-Messvorrichtung umfasst einen Terahertz-Transceiver 10, der über eine nicht näher dargestellte Verbindung an einem im Beispiel kreisförmigen Drehring 12 angeordnet und mit diesem um 360° drehbar gelagert ist. Der Terahertz-Transceiver 10 umfasst einen Terahertz-Sender und einen am selben Ort angeordneten Terahertz-Empfänger. Im Bereich des Terahertz-Transceivers 10 ist in dem Drehring 12 ein für von dem Terahertz-Sender ausgesendete Terahertz-Strahlung zumindest teiltransparentes Fenster 14 angeordnet. Das Fenster 14 kann ausgestaltet sein wie oben erläutert. Die von dem Terahertz-Sender des Terahertz-Transceivers 10 ausgesendete Terahertz-Strahlung kann entsprechend durch das Fenster 14 hindurch in das einen Messbereich 16 der Terahertz-Messvorrichtung bildende Innere des Drehrings 12 gelangen und wieder heraus.

Auf einer dem Terahertz-Transceiver 10 gegenüberliegenden Seite des Drehrings 12 ist ein Reflektor 18 für Terahertz-Strahlung angeordnet, der von dem Terahertz-Sender ausgesendete Terahertz-Strahlung zurück zu dem Terahertz-Transceiver 10 und damit dem Terahertz-Empfänger reflektiert, wie in Fig. 1 durch den Pfeil 20 veranschaulicht. Die Messdaten des Terahertz-Empfängers liegen an einer Auswerteeinrichtung 22 der Terahertz-Messvorrichtung an. Im Betrieb ist in dem Messbereich 16 ein zu vermessender Gegenstand, zum Beispiel ein Kunststoffrohr, angeordnet, wobei die Längsachse des Kunststoffrohrs in Figur 1 in die Zeichenebene hinein verläuft. Von dem Terahertz-Sender des Terahertz-Transceivers 10 ausgesendete Terahertz-Strahlung wird von Grenzflächen des Kunststoffrohrs mehrfach reflektiert, wobei die mehrfach reflektierten Strahlungsanteile nach Durchstrahlen des Kunststoffrohrs von dem Reflektor 18 reflektiert werden und nach erneutem Durchstrahlen des Gegenstands und weiterer Mehrfachreflektionen an den Grenzflächen des Kunststoffrohrs durch das Fenster 14 hindurch zurück zu dem Terahertz-Transceiver 10 gelangen. Auf Grundlage beispielsweise einer Auswertung der Laufzeiten der an den unterschiedlichen Grenzflächen reflektierten Terahertz-Strahlung bestimmt die Auswerteeinrichtung 22 Geometrieparameter, insbesondere die Wanddicke des Kunststoffrohrs.

Figur 1 veranschaulicht eine herkömmliche Kalibriermethode für eine solche Terahertz-Messvorrichtung. Dazu wird in dem Messbereich 16 ein rohrförmiger Kalibriergegenstand 24 aus Glas angeordnet. Die Wanddicken des rohrförmigen Kalibriergegenstands 24 werden vorher ermittelt, beispielsweise durch ein Zertifizierungsbüro. Auf Grundlage der oben erläuterten Funktionsweise bestimmt die Terahertz-Messvorrichtung die Wanddicken des rohrförmigen Kalibriergegenstands 24. Anhand eines Vergleichs der bestimmten Wanddicken mit den zuvor beispielsweise durch das Zertifizierungsbüro ermittelten Wanddicken wird die Terahertz-Messvorrichtung kalibriert.

Nachteilig bei diesem bekannten Verfahren ist zum einen, dass der rohrförmige Kalibriergegenstand 24 nicht mit einer Genauigkeit hinsichtlich seiner Wanddicke hergestellt werden kann, die der Genauigkeit der Terahertz-Messvorrichtung entspricht. Entsprechend können die Wanddicken durch ein Zertifizierungsbüro auch nicht in der entsprechenden Genauigkeit zertifiziert werden. Schon aus diesem Grund ist eine präzise Kalibrierung mit dem rohrförmigen Kalibriergegenstand 24 nicht möglich. Hinzu kommt, dass der rohrförmige Kalibriergegenstand 24 in aufwendiger Weise sehr präzise zentral in dem Messbereich 16 angeordnet werden muss. Bereits kleine Lagerabweichungen verfälschen das Messergebnis, da einerseits ein seitliches Verschieben des rohrförmigen Kalibriergegenstands 24 in Figur 1 die durch die Terahertz-Messvorrichtung gemessenen Wanddicken verändert und andererseits, da wie erläutert der rohrförmige Kalibriergegenstand 24 nicht mit einer ausreichend konstanten Wanddicke herstellbar ist, und zwar weder über den Umfang, noch in Längsrichtung. Auch beispielsweise eine Lageveränderung in Längsrichtung, in Fig. 1 also in die Zeichenebene hinein, führt entsprechend zu einer Verfälschung des Messergebnisses.

In Figur 2 ist eine erfindungsgemäße Terahertz-Messvorrichtung zur Durchführung der erfindungsgemäßen Kalibrierverfahrens nach einem ersten Ausführungsbeispiel gezeigt. Sie unterscheidet sich von der in Fig. 1 dargestellten Terahertz-Messvorrichtung hinsichtlich des Kalibriergegenstands. So ist bei dem Ausführungsbeispiel nach Fig. 2 ein plattenförmiger Kalibriergegenstand 26 aus einem Glas innerhalb des Drehrings 12 angeordnet, der planparallele, die zu vermessende Wand begrenzende Grenzflächen mit hoher Ebenheit aufweist. In dem in Fig. 2 gezeigten Ausführungsbeispiel ist an dem Drehring 12 eine Halterung 28, umfassend einen umlaufenden Vorsprung 27 und einen Boden 29, angeordnet, die präzise die Position und Lage des Kalibriergegenstands 26 auf der Unterseite des Drehrings 12 vorgibt. Der Kalibriergegenstand 26 ist so präzise und lagefest angeordnet, wobei die Anordnung einfach und auch für weniger geübte Bedienpersonen problemlos möglich ist.

Wie in Figur 2 zu erkennen, ist der Kalibriergegenstand 26 dabei derart innerhalb des Drehrings 12 angeordnet, dass die Grenzflächen 30, 32 der zu vermessenden Wand senkrecht zur Vertikalen ausgerichtet sind. Weiter ist zu erkennen, dass der Terahertz-Sender des Terahertz-Transceivers 10 in einer Drehposition ist, so dass die ausgesendete Terahertz-Strahlung entlang einer vertikalen Hauptstrahlrichtung von oben nach unten auf den Kalibriergegenstand 26 ausgesendet wird. Während sich der Terahertz-Transceiver 10 somit am höchsten Ort des Drehrings 12 befindet, ist der Reflektor 18 entsprechend am tiefsten Ort des Drehrings 12 angeordnet. Auf diese Weise ist sichergestellt, dass die Terahertz-Strahlung lotrecht auf die Grenzflächen 30, 32 des Kalibriergegenstands 26 fällt. Dies vereinfacht die Messung und Auswertung.

Der Kalibriergegenstand 26 kann beispielsweise aus einem Quarzglas oder einem Borosilikatglas bestehen, wie oben erläutert. Denkbar ist auch, dass der Kalibriergegenstand 26 aus einer Keramik besteht. Die Halterung kann beispielsweise aus einem Schaumstoff bestehen. Anstelle der Halterung 28 könnten auch (optische) Markierungen auf der Innenseite des Drehrings 12 vorgesehen sein, die eine Position des Kalibriergegenstands 26 vorgeben.

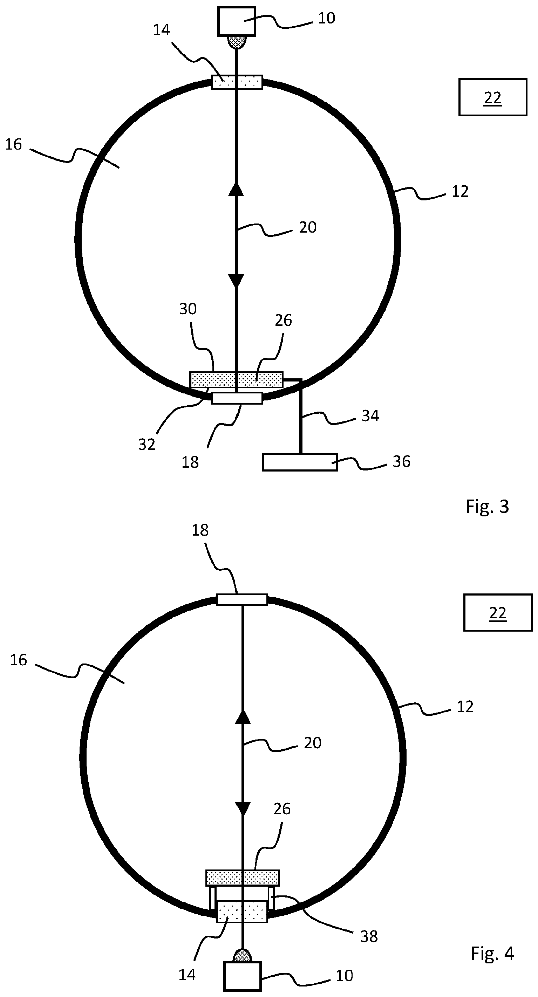

Figur 3 zeigt ein weiteres Ausführungsbeispiel einer erfindungsgemäßen Terahertz-Messvorrichtung, die weitgehend der in Fig. 2 dargestellten Terahertz-Messvorrichtung entspricht. Sie unterscheidet sich von der in Fig. 2 dargestellten Terahertz-Messvorrichtung hinsichtlich der Halterung des plattenförmigen Kalibriergegenstands 26 innerhalb des Drehrings 12. Bei dem Ausgangsbeispiel nach Fig. 3 ist hierzu eine außerhalb des Drehrings 12 angeordnete Halteeinrichtung 34 vorgesehen, die den Kalibriergegenstand 26 innerhalb des Drehrings 12 hält. Die Halteeinrichtung 34 ist nach Art eines Ständers ausgebildet und kann mit einem Ständerfuß 36 auf einem Untergrund in dem Raum der Terahertz-Messvorrichtung aufstehen. Denkbar ist auch, dass die Halteeinrichtung 34 an einem nicht rotierenden Teil der Terahertz-Messvorrichtung befestigt ist.

Figur 4 zeigt ein weiteres Ausführungsbeispiel, das sich von dem in Figur 2 dargestellten Ausführungsbeispiel zum einen dadurch unterscheidet, dass der Terahertz-Transceiver 10 an der Unterseite des Drehrings 12 und der Reflektor 18 gegenüberliegend an der Oberseite des Drehrings 12 angeordnet sind. Das Fenster 14 befindet sich entsprechend ebenfalls an der Unterseite des Drehrings 12, so dass die von dem Terahertz-Transceiver 10 ausgesandte Terahertzstrahlung vertikal von unten nach oben ausgesendet wird. Weiter unterscheidet sich das Ausführungsbeispiel nach Figur 4 von dem in Figur 2 dargestellten Ausführungsbeispiel hinsichtlich der Halterung des Kalibriergegenstands 26. So ist in Figur 4 als Halterung ein mit seiner Längsachse vertikal ausgerichtetes Halterohr 38, zum Beispiel aus Kunststoff, an der tiefsten Position des Drehrings 12 in diesen eingesetzt. Das Halterohr 38 bildet eine Auflage für den Kalibriergegenstand 26. Der Innendurchmesser des Halterohrs 38 entspricht etwa der Breite des Fensters 14 oder eines das Fenster 14 aufnehmenden Flansches, so dass das Halterohr 38 mit seiner Längsachse vertikal auf das Fenster 14 bzw. den Flansch aufgesetzt werden kann, wobei das Fenster 14 bzw. der Flansch gleichzeitig das Halterohr 38 zentriert und ausrichtet. Außerdem wird auf diese Weise vorteilhaft der Kalibriergegenstand 26 zuverlässig und präzise im rechten Winkel zur Terahertz-Strahlung ausgerichtet. Das Halterohr 38 stellt auch einen für die Messung erforderlichen Abstand zwischen dem Kalibriergegenstand 26 und dem Fenster 14 sicher.

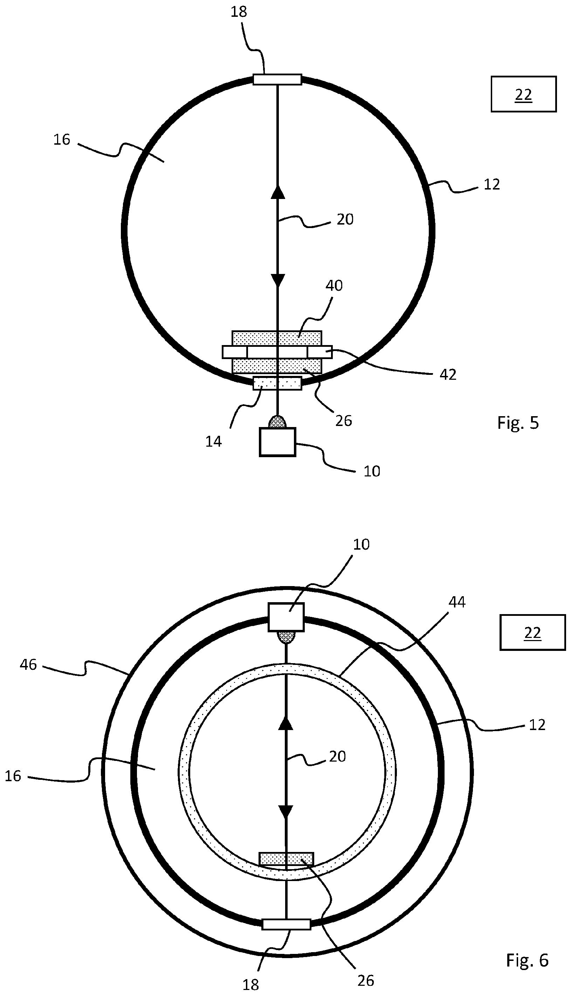

Das in Figur 5 dargestellte Ausführungsbeispiel besitzt den gleichen Messaufbau mit Terahertz-Transceiver 10, Fenster 14 und Reflektor 18 wie das Ausführungsbeispiel nach Figur 4. In dem in Figur 5 gezeigten Ausführungsbeispiel ist zusätzlich zu dem ersten Kalibriergegenstand 26 ein zweiter plattenförmiger und für die Terahertz-Strahlung des Terahertz-Senders zumindest teiltransparenter Kalibriergegenstand 40 vorgesehen, der parallel und beabstandet zu dem ersten Kalibriergegenstand 26 angeordnet ist. Der zweite Kalibriergegenstand 40 kann identisch zu dem ersten Kalibriergegenstand 26 ausgebildet sein. Die Kalibriergegenstände 26 und 40 könnten aber zum Beispiel auch eine unterschiedliche Dicke aufweisen. Zwischen den Kalibriergegenständen 26, 40 ist ein rahmenförmiger Abstandhalter 42 angeordnet, der beispielsweise aus Schaumstoff bestehen kann. Er lässt mittig zwischen den Kalibriergegenständen 26, 40 einen Freiraum, so dass die Terahertz-Strahlung ohne die Gefahr eines Verfälschens des Messergebnisses durch den Abstandhalter 42 den Freiraum durchlaufen kann. Auf diese Weise kann im Rahmen der Kalibrierung die Messung zweier benachbarter Wanddicken nachgebildet werden. Dabei kann zum Beispiel auf Grundlage einer Auswertung der Terahertz-Strahlung eine Abstandsmessung zu den einander abgewandten, äußeren Grenzflächen der Kalibriergegenstände 26 und 40, entsprechend einer Durchmessermessung eines Rohrs erfolgen.

Ein weiterer Vorteil der Anordnung von Terahertz-Transceiver 10, Fenster 14 und Reflektor 18 nach den Figuren 4 und 5 ist, dass im Bereich des Terahertz-Transceivers 10 der Abstrahlwinkel der Antenne im Wesentlichen auf sein Nahfeld begrenzt ist. Der oder die Kalibriergegenstände können deshalb deutlich geringere Abmessungen aufweisen als bei der Anordnung nach den Figuren 1 bis 3. Beispielsweise sind Kalibriergegenstände mit einer Breite von 100 mm bzw. bei quadratischer Ausführung von 100 mm x 100 mm denkbar.

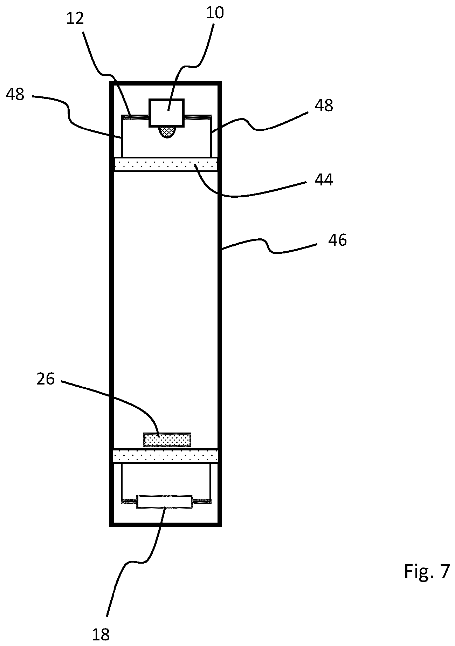

Die Figuren 6 und 7 veranschaulichen ein weiteres Ausführungsbeispiel, das sich von den vorstehend erläuterten Ausführungsbeispielen zunächst dadurch unterscheidet, dass der Drehring 12 mit den weiteren Komponenten in einem Gehäuse 46 der Terahertz-Messvorrichtung angeordnet sind. Ein solches Gehäuse 46 kann auch bei den Ausführungsbeispielen nach den Figuren 1 bis 5 vorgesehen sein. Weiterhin ist der Transceiver 10 bei dem Ausführungsbeispiel nach den Figuren 6 und 7 unmittelbar an dem Drehring 12 angeordnet. Anstelle des Fensters 14 ist ein innerhalb des Drehrings 12 angeordnetes, für die Terahertz-Strahlung zumindest teiltransparentes Ringfenster 44 vorgesehen, das den Transceiver 10 und den Reflektor 18 schützt. Der Kalibriergegenstand 26 ist in die Unterseite des Ringfensters 44 eingelegt, das somit gleichzeitig eine Auflage für den Kalibriergegenstand 26 bildet. In Figur 7 ist zu erkennen, dass der Drehring 12 ein U-förmiges Profil aufweist, wobei sich das Ringfenster 44 an den freien Enden der Schenkel 48 des U-förmigen Profils abstützt und so definiert innerhalb des Drehrings 12 gehalten ist. Die Ausgestaltung mit dem Ringfenster 44 könnte auch bei den Ausführungsbeispielen nach den Figuren 3 bis 5 vorgesehen sein.

Die Anordnung des Transceivers 10 und des Reflektors kann in den unterschiedlichen Ausführungsbeispielen beliebig gewählt werden. Zum Beispiel könnte durch entsprechende Drehung des Drehrings 12 auch bei dem Ausführungsbeispiel nach den Figuren 1 bis 3 und 6, 7 der Terahertz-Transceiver 10 am tiefsten Ort des Drehrings 12 angeordnet werden und der Reflektor 18 am höchsten Ort. Entsprechend könnte auch bei dem Ausführungsbeispiel nach den Figuren 4 und 5 durch entsprechende Drehung des Drehrings 12 der Terahertz-Transceiver 10 am höchsten Ort des Drehrings 12 angeordnet werden und der Reflektor 18 am tiefsten Ort.

Wie oben erläutert, kann der Reflektor 18 auch den bzw. einen Kalibriergegenstand bilden. In diesem Fall kann der Reflektor 18 anstatt des in den Figuren gezeigten Kalibriergegenstands 26 und/oder des in Figur 5 gezeigten Kalibriergegenstands 40 vorgesehen sein oder zusätzlich hierzu. Der Reflektor 18 kann dann beispielsweise aus einem Glaswerkstoff bestehen, zum Beispiel dem zu den Kalibriergegenständen 26 bzw. 40 erläuterten Glaswerkstoff. Der Reflektor 18 kann dabei fest oder lösbar in der Terahertz-Messvorrichtung angeordnet sein.

### Bezugszeichenliste

- 10: Terahertz-Transceiver
- 12: Drehring
- 14: Fenster
- 16: Messbereich
- 18: Reflektor
- 20: Pfeil
- 22: Auswerteeinrichtung
- 24: Rohrförmiger Kalibriergegenstand
- 26: Plattenförmiger Kalibriergegenstand
- 27: Vorsprung
- 28: Halterung
- 29: Boden
- 30, 32: Grenzflächen
- 34: Halteeinrichtung
- 36: Ständerfuß
- 38: Halterohr
- 40: Zweiter Kalibriergegenstand
- 42: Abstandhalter
- 44: Ringfenster
- 46: Gehäuse
- 48: Schenkel

## Patentansprüche

1. Terahertz-Messvorrichtung zum Messen der Wanddicke eines Gegenstands, wobei die Terahertz-Messvorrichtung einen mit einem Drehring (12) oder entlang eines Drehrings (12) um einen den Gegenstand während einer Messung aufnehmenden Messbereich (16) drehbaren Terahertz-Sender (10) und einen mit dem Drehring (12) oder entlang des Drehrings (12) um den Messbereich (16) drehbaren Terahertz-Empfänger (10) aufweist, der von dem Terahertz-Sender (10) auf den Gegenstand ausgesendete Terahertz-Strahlung nach Reflektion durch einen im Messbereich (16) angeordneten Gegenstand empfängt, und wobei die Terahertz-Messvorrichtung weiterhin eine Auswerteeinrichtung (22) umfasst, die ausgebildet ist, aus den Messdaten des Terahertz-Empfängers (10) eine Wanddicke des Gegenstands zu bestimmen, wobei
• ein für die von dem Terahertz-Sender (10) ausgesendete Terahertz-Strahlung zumindest teiltransparenter plattenförmiger Kalibriergegenstand (26) mit bekannter Wanddicke innerhalb des Drehrings (12) angeordnet ist,
• der Terahertz-Sender (10) in eine Drehposition bringbar ist, so dass der Terahertz-Sender (10) Terahertz-Strahlung entlang einer vertikalen Hauptstrahlrichtung auf den Kalibriergegenstand (26) aussendet,
• der Terahertz-Empfänger (10) in eine Drehposition bringbar ist, so dass der Terahertz-Empfänger (10) von Grenzflächen (30, 32) des Kalibriergegenstands (26) reflektierte und/oder den Kalibriergegenstand (26) durchstrahlende Terahertz-Strahlung empfängt, **dadurch gekennzeichnet,**
• **dass** die Auswerteeinrichtung (22) ausgebildet ist, aus den Messdaten des Terahertz-Empfängers (10) die Wanddicke des Kalibriergegenstands (26) zu bestimmen, und anhand eines Vergleichs der bestimmten Wanddicke mit der bekannten Wanddicke des Kalibriergegenstands (26) die Terahertz-Messvorrichtung zu kalibrieren.

2. Terahertz-Messvorrichtung nach Anspruch 1, **dadurch gekennzeichnet, dass** der Terahertz-Sender (10) und der Terahertz-Empfänger (10) durch einen Terahertz-Transceiver (10) ausgebildet sind.

3. Terahertz-Messvorrichtung nach einem der vorhergehenden Ansprüche, **dadurch gekennzeichnet, dass** ein dem Terahertz-Sender (10) gegenüberliegender Reflektor (18) für Terahertz-Strahlung vorgesehen ist, der von dem Terahertz-Sender (10) ausgesendete Terahertz-Strahlung zurück zu dem Terahertz-Empfänger (10) reflektiert.

4. Terahertz-Messvorrichtung nach Anspruch 3, **dadurch gekennzeichnet, dass** der Reflektor (18) mit dem Drehring (12) oder entlang des Drehrings (12) um den Messbereich (16) drehbar ist.

5. Terahertz-Messvorrichtung nach einem der Ansprüche 3 oder 4, **dadurch gekennzeichnet, dass** der Reflektor (18) den Kalibriergegenstand bildet.

6. Terahertz-Messvorrichtung nach einem der vorhergehenden Ansprüche, **dadurch gekennzeichnet, dass** an dem Drehring (12) eine Markierung zur Aufnahme des Kalibriergegenstands (26) vorgesehen ist.

7. Terahertz-Messvorrichtung nach einem der vorhergehenden Ansprüche, **dadurch gekennzeichnet, dass** an dem Drehring (12) eine Halterung (28, 38) zur Aufnahme des Kalibriergegenstands (26) vorgesehen ist.

8. Terahertz-Messvorrichtung nach Anspruch 7, **dadurch gekennzeichnet, dass** die Halterung (28) einen Boden (29) zur Aufnahme des Kalibriergegenstands (26) aufweist

9. Terahertz-Messvorrichtung nach einem der Ansprüche 7 oder 8, **dadurch gekennzeichnet, dass** die Halterung (28) aus einem Schaumstoff besteht.

10. Terahertz-Messvorrichtung nach einem der vorhergehenden Ansprüche, **dadurch gekennzeichnet, dass** ein zweiter für die von dem Terahertz-Sender (10) ausgesendete Terahertz-Strahlung zumindest teiltransparenter plattenförmiger Kalibriergegenstand (40) mit bekannter Wanddicke innerhalb des Drehrings (12) parallel und mit Abstand zu dem Kalibriergegenstand (26) angeordnet ist.

11. Terahertz-Messvorrichtung nach Anspruch 10 und einem der Ansprüche 7 bis 9, **dadurch gekennzeichnet, dass** die Halterung einen Abstandhalter (42) zwischen dem Kalibriergegenstand (26) und dem zweiten Kalibriergegenstand (40) umfasst.

12. Terahertz-Messvorrichtung nach Anspruch 11, **dadurch gekennzeichnet, dass** die Halterung auch den zweiten Kalibriergegenstand (40) aufnimmt.

13. Terahertz-Messvorrichtung nach einem der vorhergehenden Ansprüche, **dadurch gekennzeichnet, dass** eine außerhalb des Drehrings (12) und/oder an einem nicht rotierenden Teil der Terahertz-Messvorrichtung angeordnete Halteeinrichtung (34) vorgesehen ist, die den Kalibriergegenstand (26) innerhalb des Drehrings (12) hält.

14. Terahertz-Messvorrichtung nach einem der vorhergehenden Ansprüche, **dadurch gekennzeichnet, dass** der Kalibriergegenstand (26) derart innerhalb des Drehrings (12) angeordnet ist, dass die Grenzflächen (30, 32) der zu vermessenden Wand des Kalibriergegenstands (26) senkrecht zur Vertikalen ausgerichtet sind.

15. Terahertz-Messvorrichtung nach einem der vorhergehenden Ansprüche, **dadurch gekennzeichnet, dass** der Terahertz-Sender (10) und/oder der Terahertz-Empfänger (10) außerhalb des Drehrings (12) angeordnet sind, wobei der Drehring (12) ein für die Terahertz-Strahlung zumindest teiltransparentes Fenster (14) aufweist, durch das die Terahertz-Strahlung in den Messbereich (16) und/oder aus dem Messbereich (16) gelangt.

16. Terahertz-Messvorrichtung nach einem der vorhergehenden Ansprüche, **dadurch gekennzeichnet, dass** der Kalibriergegenstand (26) aus einem Glas oder einer Keramik besteht.

17. Terahertz-Messvorrichtung nach Anspruch 16, **dadurch gekennzeichnet, dass** der Kalibriergegenstand (26) aus einem Quarzglas oder einem Borosilikatglas besteht.

18. Verfahren zum Kalibrieren einer Terahertz-Messvorrichtung zum Messen der Wanddicke eines Gegenstands, wobei die Terahertz-Messvorrichtung einen mit einem Drehring (12) oder entlang eines Drehrings (12) um einen den Gegenstand während einer Messung aufnehmenden Messbereich (16) drehbaren Terahertz-Sender (10) und einen mit dem Drehring (12) oder entlang des Drehrings (12) um den Messbereich (16) drehbaren Terahertz-Empfänger (10) aufweist, der von dem Terahertz-Sender (10) auf den Gegenstand ausgesendete Terahertz-Strahlung nach Reflektion durch einen im Messbereich (16) angeordneten Gegenstand empfängt, und wobei die Terahertz-Messvorrichtung weiterhin eine Auswerteeinrichtung (22) umfasst, die ausgebildet ist, aus den Messdaten des Terahertz-Empfängers (10) eine Wanddicke des Gegenstands zu bestimmen, **dadurch gekennzeichnet, dass** das Verfahren die folgenden Schritte umfasst:
• ein für die von dem Terahertz-Sender (10) ausgesendete Terahertz-Strahlung zumindest teiltransparenter plattenförmiger Kalibriergegenstand (26) mit bekannter Wanddicke wird innerhalb des Drehrings (12) angeordnet,
• der Terahertz-Sender (10) wird in eine Drehposition gebracht, so dass der Terahertz-Sender (10) Terahertz-Strahlung entlang einer vertikalen Hauptstrahlrichtung auf den Kalibriergegenstand (26) aussendet,
• der Terahertz-Empfänger (10) wird in eine Drehposition gebracht, so dass der Terahertz-Empfänger (10) von Grenzflächen (30, 32) des Kalibriergegenstands (26) reflektierte und/oder den Kalibriergegenstand (26) durchstrahlende Terahertz-Strahlung empfängt,
• durch die Auswerteeinrichtung (22) wird aus den Messdaten des Terahertz-Empfängers (10) die Wanddicke des Kalibriergegenstands (26) bestimmt, und anhand eines Vergleichs der durch die Auswerteeinrichtung (22) bestimmten Wanddicke mit der bekannten Wanddicke des Kalibriergegenstands (26) wird die Terahertz-Messvorrichtung kalibriert.

19. Verfahren nach Anspruch 18, **dadurch gekennzeichnet, dass** es mit einer Terahertz-Messvorrichtung nach einem der Ansprüche 1 bis 17 durchgeführt wird.

## Claims

1. A terahertz measuring device for measuring the wall thickness of an object, wherein the terahertz measuring device has a terahertz transmitter (10) that can be rotated with a rotary ring (12) or along a rotary ring (12) about a measurement region (16) that encompasses the object during a measurement, and a terahertz receiver (10) that can be rotated with the rotary ring (12) or along the rotary ring (12) about the measurement region (16) and that receives terahertz radiation emitted by the terahertz transmitter (10) onto the object after being reflected by an object arranged in the measurement region (16), and wherein the terahertz measuring device further comprises an evaluation apparatus (22) that is designed to determine a wall thickness of the object from the measurement data of the terahertz receiver (10), wherein
• a planar calibration object (26) that is at least partially transparent to the terahertz radiation emitted by the terahertz transmitter (10) and that has a known wall thickness is arranged inside the rotary ring (12),
• the terahertz transmitter (10) can be brought into a rotary position, such that the terahertz transmitter (10) emits terahertz radiation along a vertical main beam direction onto the calibration object (26),
• the terahertz receiver (10) can be brought into a rotary position, such that the terahertz receiver (10) receives terahertz radiation that is reflected by interfaces (30, 32) of the calibration object (26) and/or that passes through the calibration object (26), **characterized in that**
• the evaluation apparatus (22) is designed to determine the wall thickness of the calibration object (26) from the measurement data of the terahertz receiver (10), and to calibrate the terahertz measuring device based on a comparison of the determined wall thickness with the known wall thickness of the calibration object (26).

2. The terahertz measuring device according to claim 1, **characterized in that** the terahertz transmitter (10) and the terahertz receiver (10) are formed by a terahertz transceiver (10).

3. The terahertz measuring device according to one of the preceding claims, **characterized in that** a reflector (18) for terahertz radiation opposite the terahertz transmitter (10) is provided, which reflector reflects terahertz radiation emitted by the terahertz transmitter (10) back to the terahertz receiver (10).

4. The terahertz measuring device according to claim 3, **characterized in that** the reflector (18) can be rotated with the rotary ring (12) or along the rotary ring (12) about the measurement region (16).

5. The terahertz measuring device according to one of claims 3 or 4, **characterized in that** the reflector (18) forms the calibration object.

6. The terahertz measuring device according to one of the preceding claims, **characterized in that** a marking for receiving the calibration object (26) is provided on the rotary ring (12).

7. The terahertz measuring device according to one of the preceding claims, **characterized in that** a holder (28, 38) for receiving the calibration object (26) is provided on the rotary ring (12).

8. The terahertz measuring device according to claim 7, **characterized in that** the holder (28) has a base (29) for receiving the calibration object (26).

9. The terahertz measuring device according to one of claims 7 or 8, **characterized in that** the holder (28) consists of a foam material.

10. The terahertz measuring device according to one of the preceding claims, **characterized in that** a second planar calibration object (40) that is at least partially transparent to the terahertz radiation emitted by the terahertz transmitter (10) and that has a known wall thickness is arranged inside the rotary ring (12) in parallel with and at a distance from the calibration object (26).

11. The terahertz measuring device according to claim 10 and one of claims 7 to 9, **characterized in that** the holder comprises a spacer (42) between the calibration object (26) and the second calibration object (40).

12. The terahertz measuring device according to claim 11, **characterized in that** the holder also receives the second calibration object (40).

13. The terahertz measuring device according to one of the preceding claims, **characterized in that** a holding apparatus (34) arranged outside the rotary ring (12) and/or on a nonrotating part of the terahertz measuring device is provided, which holding apparatus holds the calibration object (26) inside the rotary ring (12).

14. The terahertz measuring device according to one of the preceding claims, **characterized in that** the calibration object (26) is arranged inside the rotary ring (12) in such a way that the interfaces (30, 32) of the wall of the calibration object (26) to be measured are oriented perpendicularly to the vertical.

15. The terahertz measuring device according to one of the preceding claims, **characterized in that** the terahertz transmitter (10) and/or the terahertz receiver (10) are arranged outside the rotary ring (12), wherein the rotary ring (12) has a window (14) which is at least partially transparent to the terahertz radiation and through which the terahertz radiation enters the measurement region (16) and/or exits the measurement region (16).

16. The terahertz measuring device according to one of the preceding claims, **characterized in that** the calibration object (26) consists of a glass or a ceramic.

17. The terahertz measuring device according to claim 16, **characterized in that** the calibration object (26) consists of a quartz glass or a borosilicate glass.

18. A method for calibrating a terahertz measuring device for measuring the wall thickness of an object, wherein the terahertz measuring device has a terahertz transmitter (10) that can be rotated with a rotary ring (12) or along a rotary ring (12) about a measurement region (16) that encompasses the object during a measurement, and a terahertz receiver (10) that can be rotated with the rotary ring (12) or along the rotary ring (12) about the measurement region (16) and that receives terahertz radiation emitted by the terahertz transmitter (10) onto the object after being reflected by an object arranged in the measurement region (16), and wherein the terahertz measuring device further comprises an evaluation apparatus (22) that is designed to determine a wall thickness of the object from the measurement data of the terahertz receiver (10), **characterized in that** the method comprises the following steps:
• a planar calibration object (26) that is at least partially transparent to the terahertz radiation emitted by the terahertz transmitter (10) and that has a known wall thickness is arranged inside the rotary ring (12),
• the terahertz transmitter (10) is brought into a rotary position, such that the terahertz transmitter (10) emits terahertz radiation along a vertical main beam direction onto the calibration object (26),
• the terahertz receiver (10) is brought into a rotary position, such that the terahertz receiver (10) receives terahertz radiation that is reflected by interfaces (30, 32) of the calibration object (26) and/or that passes through the calibration object (26),
• by means of the evaluation apparatus (22), the wall thickness of the calibration object (26) is determined from the measurement data of the terahertz receiver (10) and the terahertz measuring device is calibrated based on a comparison of the wall thickness determined by means of the evaluation apparatus (22) with the known wall thickness of the calibration object (26).

19. The method according to claim 18, **characterized in that** it is carried out using a terahertz measuring device according to one of claims 1 to 17.

## Revendications

1. Dispositif de mesure térahertz destiné à mesurer l'épaisseur de paroi d'un objet, le dispositif de mesure térahertz présentant un émetteur térahertz (10) rotatif au moyen d'un anneau rotatif (12) ou le long d'un anneau rotatif (12) autour d'une région de mesure (16) recevant l'objet pendant une mesure, ainsi qu'un récepteur térahertz (10) rotatif au moyen de l'anneau rotatif (12) ou le long de l'anneau rotatif (12) autour de la région de mesure (16), lequel reçoit le rayonnement térahertz émis vers l'objet par l'émetteur térahertz (10) après réflexion par un objet disposé dans la région de mesure (16), et le dispositif de mesure térahertz comportant en outre une unité d'évaluation (22) conçue pour déterminer une épaisseur de paroi de l'objet à partir des données de mesure du récepteur térahertz (10), dans lequel
• un objet d'étalonnage (26) en forme de plaque, au moins partiellement transparent au rayonnement térahertz émis par l'émetteur térahertz (10) et présentant une épaisseur de paroi connue, est disposé dans l'anneau rotatif (12),
• l'émetteur térahertz (10) peut être mis dans une position de rotation de sorte que l'émetteur térahertz (10) émet un rayonnement térahertz vers l'objet d'étalonnage (26) le long d'une direction de rayonnement principale verticale,
• le récepteur térahertz (10) peut être mis dans une position de rotation de sorte que le récepteur térahertz (10) reçoit un rayonnement térahertz réfléchi par des surfaces limites (30, 32) de l'objet d'étalonnage (26) et/ou traversant l'objet d'étalonnage (26), **caractérisé en ce que**
• l'unité d'évaluation (22) est conçue pour déterminer l'épaisseur de paroi de l'objet d'étalonnage (26) à partir des données de mesure du récepteur térahertz (10), et pour étalonner le dispositif de mesure térahertz à l'aide d'une comparaison de l'épaisseur de paroi déterminée avec l'épaisseur de paroi connue de l'objet d'étalonnage (26).

2. Dispositif de mesure térahertz selon la revendication 1, **caractérisé en ce que** l'émetteur térahertz (10) et le récepteur térahertz (10) sont constitués par un émetteur-récepteur térahertz (10).

3. Dispositif de mesure térahertz selon l'une des revendications précédentes, **caractérisé en ce qu'**il est prévu un réflecteur (18) de rayonnement térahertz situé en face de l'émetteur térahertz (10), lequel renvoie le rayonnement térahertz émis par l'émetteur térahertz (10) vers le récepteur térahertz (10).

4. Dispositif de mesure térahertz selon la revendication 3, **caractérisé en ce que** le réflecteur (18) est rotatif autour de la région de mesure (16) au moyen de l'anneau rotatif (12) ou le long de l'anneau rotatif (12).

5. Dispositif de mesure térahertz selon l'une des revendications 3 ou 4, **caractérisé en ce que** le réflecteur (18) forme l'objet d'étalonnage.

6. Dispositif de mesure térahertz selon l'une des revendications précédentes, **caractérisé en ce qu'**un marquage destiné à la réception de l'objet d'étalonnage (26) est prévu sur l'anneau rotatif (12).

7. Dispositif de mesure térahertz selon l'une des revendications précédentes, **caractérisé en ce qu'**un support (28, 38) destiné à la réception de l'objet d'étalonnage (26) est prévu sur l'anneau rotatif (12).

8. Dispositif de mesure térahertz selon la revendication 7, **caractérisé en ce que** le support (28) présente un fond (29) destiné à la réception de l'objet d'étalonnage (26).

9. Dispositif de mesure térahertz selon l'une des revendications 7 ou 8, **caractérisé en ce que** le support (28) est constitué de mousse.

10. Dispositif de mesure térahertz selon l'une des revendications précédentes, **caractérisé en ce qu'**un deuxième objet d'étalonnage (40) en forme de plaque, au moins partiellement transparent au rayonnement térahertz émis par l'émetteur térahertz (10) et présentant une épaisseur de paroi connue, est disposé dans l'anneau rotatif (12) parallèlement à l'objet d'étalonnage (26) et à distance de celui-ci.

11. Dispositif de mesure térahertz selon la revendication 10 et l'une des revendications 7 à 9, **caractérisé en ce que** le support comporte un espaceur (42) entre l'objet d'étalonnage (26) et le deuxième objet d'étalonnage (40).

12. Dispositif de mesure térahertz selon la revendication 11, **caractérisé en ce que** le support reçoit également le deuxième objet d'étalonnage (40).

13. Dispositif de mesure térahertz selon l'une des revendications précédentes, **caractérisé en ce qu'**il est prévu un dispositif de maintien (34) disposé à l'extérieur de l'anneau rotatif (12) et/ou sur une partie non rotative du dispositif de mesure térahertz, lequel maintient l'objet d'étalonnage (26) dans l'anneau rotatif (12).

14. Dispositif de mesure térahertz selon l'une des revendications précédentes, **caractérisé en ce que** l'objet d'étalonnage (26) est disposé de telle façon dans l'anneau rotatif (12), que les surfaces limites (30, 32) de la paroi de l'objet d'étalonnage (26) à mesurer sont orientées perpendiculairement à la verticale.

15. Dispositif de mesure térahertz selon l'une des revendications précédentes, **caractérisé en ce que** l'émetteur térahertz (10) et/ou le récepteur térahertz (10) sont disposés à l'extérieur de l'anneau rotatif (12), l'anneau rotatif (12) présentant une fenêtre (14) au moins partiellement transparente au rayonnement térahertz, à travers laquelle le rayonnement térahertz entre dans la région de mesure (16) et/ou sort de la région de mesure (16).

16. Dispositif de mesure térahertz selon l'une des revendications précédentes, **caractérisé en ce que** l'objet d'étalonnage (26) est constitué d'un verre ou d'une céramique.

17. Dispositif de mesure térahertz selon la revendication 16, **caractérisé en ce que** l'objet d'étalonnage (26) est constitué d'un verre de quartz ou d'un verre borosilicaté.

18. Procédé d'étalonnage d'un dispositif de mesure térahertz destiné à mesurer l'épaisseur de paroi d'un objet, le dispositif de mesure térahertz présentant un émetteur térahertz (10) rotatif au moyen d'un anneau rotatif (12) ou le long d'un anneau rotatif (12) autour d'une région de mesure (16) recevant l'objet pendant une mesure, ainsi qu'un récepteur térahertz (10) rotatif au moyen de l'anneau rotatif (12) ou le long de l'anneau rotatif (12) autour de la région de mesure (16), lequel reçoit le rayonnement térahertz émis vers l'objet par l'émetteur térahertz (10) après réflexion par un objet disposé dans la région de mesure (16), et le dispositif de mesure térahertz comportant en outre une unité d'évaluation (22) conçue pour déterminer une épaisseur de paroi de l'objet à partir des données de mesure du récepteur térahertz (10), **caractérisé en ce que** le procédé comprend les étapes suivantes :
• un objet d'étalonnage (26) en forme de plaque, au moins partiellement transparent au rayonnement térahertz émis par l'émetteur térahertz (10) et présentant une épaisseur de paroi connue, est disposé dans l'anneau rotatif (12),
• l'émetteur térahertz (10) est mis dans une position de rotation de sorte que l'émetteur térahertz (10) émet un rayonnement térahertz vers l'objet d'étalonnage (26) le long d'une direction de rayonnement principale verticale,
• le récepteur térahertz (10) est mis dans une position de rotation de sorte que le récepteur térahertz (10) reçoit un rayonnement térahertz réfléchi par des surfaces limites (30, 32) de l'objet d'étalonnage (26) et/ou traversant l'objet d'étalonnage (26),
• l'épaisseur de paroi de l'objet d'étalonnage (26) est déterminée par l'unité d'évaluation (22) à partir des données de mesure du récepteur térahertz (10), et le dispositif de mesure térahertz est étalonné à l'aide d'une comparaison de l'épaisseur de paroi déterminée avec l'épaisseur de paroi connue de l'objet d'étalonnage (26).

19. Procédé selon la revendication 18, **caractérisé en ce qu'**il est mis en œuvre au moyen d'un dispositif de mesure térahertz selon l'une des revendications 1 à 17.
